# EUROPEAN PATENT SPECIFICATION

(11) **EP 3 629 435 B1**
(45) Date of publication and mention of the grant of the patent: **10.08.2022**
(21) Application number: 19198923.5
(22) Date of filing: 23.09.2019
(51) Int. Cl.: H02G 3/08, H02G 3/12, H02G 3/14

(54) **PANEL ASSEMBLY AND MULTIGANG PANEL**
PANEELANORDNUNG UND MEHRSERIENPANEEL
ENSEMBLE DE PANNEAUX ET PANNEAU MULTIGANG

(30) Priority: 28.09.2018 CN 201821592080 U
(43) Date of publication of application: 01.04.2020
(73) Proprietor: Schneider Electric (Australia) Pty Limited, New South Wales 2113 (AU)
(72) Inventor: SHANG, Pei, Shenzhen, 518000 (CN)
(74) Representative: Manitz Finsterwald Patent- und Rechtsanwaltspartnerschaft mbB

(56) References cited:
- EP-A2- 1 962 388
- WO-A1-2019/021083
- DE-A1- 10 016 592
- US-A- 4 359 619
- US-A- 5 457 286
- US-A1- 2010 051 312

## Description

### FIELD

Embodiments of the present disclosure generally relate to the field of panel assembly, and more specifically, to a frameless multigang panel assembly.

### BACKGROUND

Nowadays, a lot of switch panels, receptacle panels or other types of panels employ a frameless design. The frameless panel has a simple and aesthetically pleasing appearance. However, in the case that a plurality of frameless panels form a multigang product, if the multigang connector connecting the plurality of frameless panels is arranged improperly, a frame probably appears around the periphery of the multigang product, or the mounting appearance of the multigang product may not be attained (i.e., users are unable to view the multigang product as a whole). Therefore, for the frameless multigang panel, there arises a problem that it is difficult to arrange a multigang connector therein.

US 5 457 286 A discloses a face plate assembly according to the preamble of claim 1.

US 2010/051312 A1 discloses a modular electrical cover plate assembly. The assembly has an outer frame having two side walls, a top wall and a bottom wall. At least one cover plate is mounted within the frame. A locking structure is provided for locking the frame to the cover plate.

DE 10 016 592 A1 discloses a cover frame system for single or multiple combinations consists of one or more cover plates and profiled strips matching these that are fastened by plug connectors to the cover plates.

US 4 359 619 A discloses a cover for a box of electric contacts. For use in combination with a box-type receptable containing electrical contacts such as switch contacts or a socket, a first cover comprising a planar frame on which the cover is removably mounted, the frame defining an access opening, a pair of fixed spaced headboards extending across the frame, the headboards being at opposite ends of the opening and having their outer surfaces lying substantially in a plane that is disposed slightly outwardly from the plane of the frame and defining between them a space that extends over the access opening and transversely entirely across the frame, a complementary cover mounted in and occupying that space, the complementary cover substantially entirely filling the space and extending transversely entirely across the space and having on opposite end edges sliding fit with the headboards, with the outer surface of the complementary cover substantially coplanar with the outer surfaces of the headboards, and pins on the inner side of the complementary cover coacting with recesses on the frame for removably attaching the complementary cover to the first cover to overlie the cover opening.

EP 1 962 388 A2 discloses a frame for electric switches and plug sockets. The frame has frameworks and an intermediate piece, where the frameworks are formed for providing the mutual connection with form-fit interference recesses and projections at opposite corner edges. The recesses and the projections are covered by the intermediate pieces that are insertable on the individual frameworks adjacent to edge areas and lockable in the interference position.

### SUMMARY

In order to solve the above technical problem, specifically obtaining a frameless multigang panel that is more convenient to use and visually pleasing, the embodiments of the present disclosure provide an improved panel assembly.

In a first aspect of the present disclosure, there is provided a panel assembly. The panel assembly comprises: a plurality of panel covers arranged sequentially adjacent to each other, each being frameless and comprising an engagement portion disposed thereon; and a panel element adapted to be secured across the plurality of panel covers onto the engagement portions of the plurality of panel covers, thereby connecting the plurality of panel covers.

According to embodiments of the present disclosure, the engagement portions are disposed on the frameless panel covers, such that the panel element can be disposed as a multigang connector on a plurality of panel covers to connect them. In this way, the plurality of panels mounted exhibit an appearance of a multigang product, without needing a frame, and meanwhile, the panel covers can be further positioned and secured. The panel assembly for multigang as described herein has advantageous of having a pleasing appearance, incurring low costs, and being mounted conveniently.

In some embodiments of the present disclosure, each of the engagement portions is a recess formed on the respective panel cover and adapted to receive a portion of the panel element, and the recesses of the adjacent panel covers are aligned with each other. In those embodiments, the recesses formed on the panel covers may receive the panel element, thereby preventing the panel element from protruding out of the outer surface of the panel. Moreover, since the recesses of the adjacent panel covers are aligned with each other, the panel element can be secured across the plurality of panel covers.

In some embodiments of the present disclosure, the respective engagement portions are disposed at respective edges of outside surfaces of the respective panel covers. In those embodiments, by disposing the respective engagement portions at the respective edges, the panel element can be secured more conveniently to the engagement portions.

The panel element is of a strip shape. The panel element with a strip shape is connected more conveniently to the plurality of panel covers, which is also advantageous for mating with the engagement portions.

In some embodiments of the present disclosure, the panel element is adapted to be secured with the engagement portions by means of an engagement device. By providing an engagement device, the solution can achieve a stable connection between the panel element and the panel covers.

In some embodiments of the present disclosure, the engagement device comprises a secured component and a positioning component. The positioning component is provided for positioning relative positions of the panel element and the engagement portions, and the secured component is provided for securing the connection between the panel element and the engagement portions after the accurate positioning.

In some embodiments of the present disclosure, the secured component comprises an engagement notch disposed on one of the engagement portion and the panel element, and an engagement snap disposed on the other of the engagement portion and the panel element. In those embodiments, the notch and the snap can achieve a convenient and efficient connection between the panel element and the engagement portion.

In some embodiments of the present disclosure, the positioning component comprises a positioning hole disposed on one of the engagement portion and the panel element, and a positioning protrusion disposed on the other of the engagement portion and the panel element. In those embodiments, by providing the positioning hole and the positioning protrusion, the panel element can be guided effectively to be secured to the engagement portions.

A plurality of functional modules are provided, and each of the plurality of panel covers is mounted to the respective functional module. The functional modules are provided for implementing the actual function of the panel.

This Summary is provided to introduce a selection of concepts in a simplified form that are further described below in the Detailed Description. This Summary is not intended to identify key features or essential features of the present disclosure, nor is it intended to be used to limit the scope of the present disclosure.

### BRIEF DESCRIPTION OF THE DRAWINGS

The above and other objectives, features, and advantages of the present disclosure will become more apparent, through the following detailed description of the example embodiments of the present disclosure with reference to the accompanying drawings in which the same reference symbols refer to the same elements.
Fig. 1 is an exploded view of a panel assembly 100 according to embodiments of the present disclosure.
Fig. 2 is a schematic diagram illustrating a functional module 21 according to some embodiments of the present disclosure.
Fig. 3A and Fig. 3B are schematic diagrams illustrating an outer side surface and an inner side surface of a panel element 11 according to some embodiments of the present disclosure.
Fig. 4A and Fig. 4B are schematic diagrams illustrating an outer side surface and an inner side surface of a panel element 4 according to some embodiments of the present disclosure.
Fig. 5A and Fig. 5B are schematic diagrams illustrating an outer side surface and an inner side surface of a panel strip 41 according to some embodiments of the present disclosure.
Fig. 6A through Fig. 6E are schematic diagrams illustrating assembling of the panel assembly 100 according to some embodiments of the present disclosure.

### DETAILED DESCRIPTION OF EMBODIMENTS

Preferred embodiments of the present disclosure will be described below with reference to the drawings. Although the preferred implementations of the present disclosure are illustrated in the drawings, it would be appreciated that the present disclosure may be implemented in various manners but should not be limited by the implementations as described herein. Rather, these implementations are provided to disclose the present disclosure more thoroughly and completely, and to convey the scope of the present disclosure fully to those skilled in the art. Those skilled in the art may acquire alternative technical solutions from the following description, without departing from the spirits and the protection scope of the present disclosure.

As used herein, the term "includes" and its variants are to be read as open-ended terms that mean "includes, but is not limited to." The term "or" is to be read as "and/or" unless the context clearly indicates otherwise. The term "based on" is to be read as "based at least in part on." The term "one example embodiment" and "an embodiment" are to be read as "at least one example embodiment." Other definitions, explicit and implicit, may be included below.

The embodiments of the present disclosure provide an improved panel assembly. The panel assembly includes a panel element disposed on a plurality of panel covers, which can directly connect the plurality of panel covers. The mounted panel element is in a state of connecting the plurality of panels, as seen from the outside of the multigang product, without generating a frame around the periphery of the multigang product. In the meantime, the panel element is helpful for positioning and securing of the plurality panels. The solution according to embodiments of the present disclosure has advantages of low costs and convenient mounting, but also can reliably guarantee the mounting appearance of the multigang product.

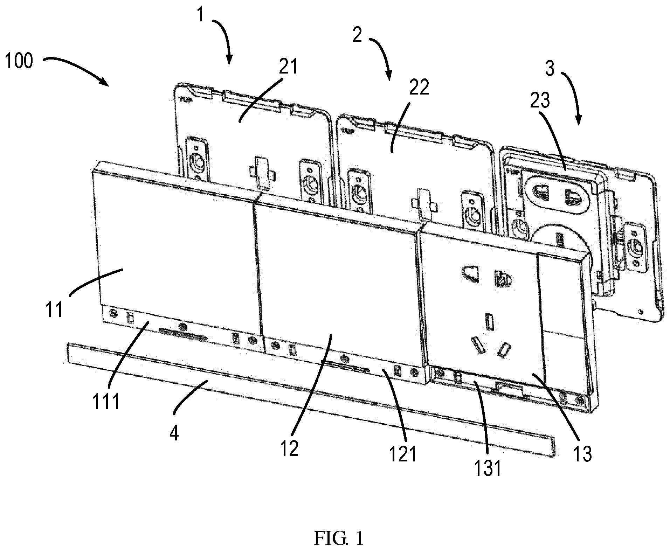

Fig. 1 is an exploded view of a panel assembly 100 of a multigang panel according to embodiments of the present disclosure. The multigang panel is a combination of a plurality of panels, and the panel according to embodiments of the present disclosure is a frameless panel. Each of panels that constitute the multigang panel may be a receptacle panel, switch panel or other type of panel.

As shown in Fig. 1, the panel assembly 100 may include a plurality of panel covers 11, 12 and 13. In some embodiments of the present disclosure, the panel assembly 100 may further include a plurality of functional modules 21, 22 and 23. The functional module includes respective components implementing panel functions. For example, the functional module 23 includes a receptacle component.

Generally, the panel covers 11, 12 and 13 correspond to the functional modules 21, 22 and 23, respectively. For example, the panel cover 11 may be mounted onto the functional module 21 to form a panel 1, the panel cover 12 may be mounted to the functional module 22 to form a panel 2, and the panel cover 13 may be mounted to the functional module 23 to form a panel 3. The panels 1, 2 and 3 may be arranged sequentially adjacent to each other, such that the panel covers 11, 12 and 13 can also be arranged sequentially adjacent to each other.

The panel covers 11, 12 and 13 which are all frameless panel covers include an engagement portion 111, 121 and 131 disposed thereon, respectively. As shown in Fig. 1, the panel assembly 100 also includes a panel element 4. The panel element 4 is secured across the plurality of panel covers 11, 12 and 13 onto the respective engagement portions 111, 121 and 131 of the plurality of panel covers, thereby connecting a plurality of panel covers 11, 12 and 13.

In some embodiments of the present disclosure, the engagement portion 111, 121 or 131 is a recess formed on the panel cover 11, 12 or 13, which is adapted to receive the panel element 4. The recess on each panel cover receives a portion of the panel element 4, and the recesses on the adjacent panel covers are aligned with each other. The recess, for example, may be a slot, gap, notch, or various structures capable of receiving the panel element 4. A connection among the plurality of panels is accomplished at the outer side surface of the multigang panel, in such a manner that respective portions of the panel element 4 are secured in recesses of the respective panel covers.

In some embodiments of the present disclosure, the engagement portion 111, 121 or 131 may be disposed at an edge of the outer side surface of the respective panel cover. As shown in Fig. 1, the engagement portion 111, 121 or 131 is disposed at the whole lower edge of the outer side surface of the respective panel cover, and forms a gap like an L-shape. However, the engagement portion 111, 121 or 131 may be disposed at other position of the panel cover 11, 12 or 13. For example, the engagement portion 111, 121 or 131 may be disposed at the upper edge of the outer side surface of the panel cover 11, 12 or 13, or at a position of the outer side surface of the panel cover 11, 12 or 13, rather than the upper and lower edges, and in this case, the engagement portion 111, 121 or 131 may be of a slot structure. In addition, the engagement portion 111, 112 or 131 located at the panels in the two ends of the multigang panel may take up only a part of the respective panel length so long as the engagement portion 111, 112 or 131 can engage the panel element 4 in terms of length and position.

In some embodiments of the present disclosure, the panel element 4 may be of a strip shape. For example, the panel element 4 may be a decorative strip. Moreover, the panel element 4 may be of other shape. For example, based on the positions of the plurality of panels, or positions of the engagement portions of the respective panels, the panel element 4 may be of any other shape capable of connecting the respective panel covers together.

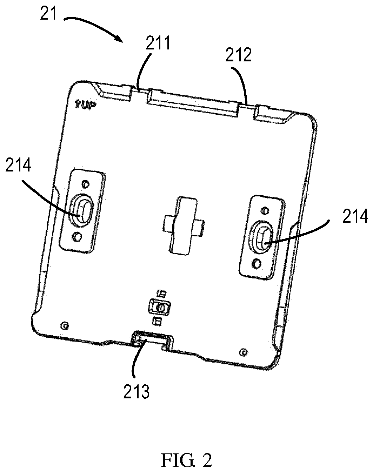

Fig. 2 through Fig. 5 are detailed schematic diagrams illustrating respective components in the panel assembly 100 according to the embodiments of the present disclosure. Fig. 2 is a detailed schematic diagram of a functional module 21. In Fig. 2, the functional module 21 may include bumps 211 and 212 and a notch 213, and the bumps 211 and 212 and the notch 213 may be used to connect the functional module 21 to the panel cover 11. The functional module 21 may also include a screw hole 214 for connecting the functional module 21 with a wall or a wall box.

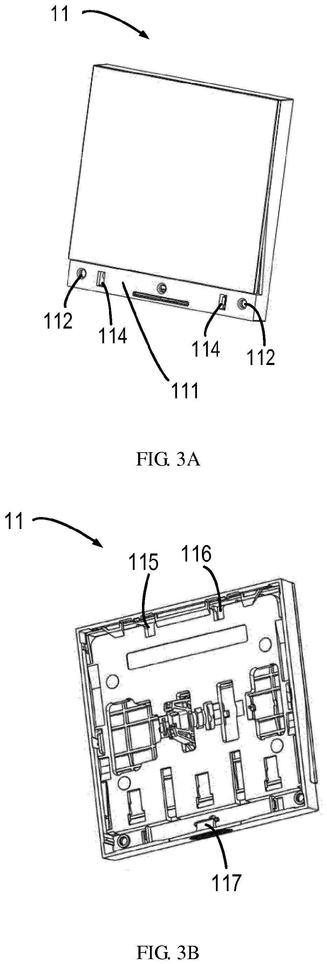

Fig. 3B illustrates an inner side surface of the panel cover 11. The inner side surface of the panel cover 11 includes notches 115 and 116 and a bump 117, wherein the notches 115 and 116 mate with the bumps 211 and 212 in Fig. 2 to achieve a fixed connection between the functional module 21 and the panel cover 11.

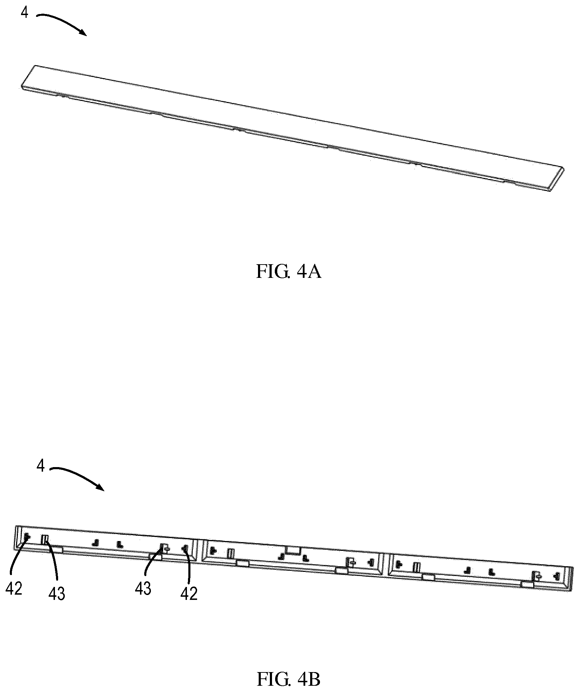

Fig. 3A illustrates an outer side surface of the panel cover 11. As shown in Fig. 3A, the engagement portion 111 of the panel cover 11 is provided with a positioning hole 112 and an engagement notch 114. Fig. 4A and Fig. 4B illustrate an outer side surface and an inner side surface of the panel element 4. As shown in Fig. 4B, the inner side surface of the panel element 4 is provided with a positioning protrusion 42 and an engagement snap 43. The positioning hole 112 in Fig. 3A and the positioning protrusion 42 in Fig. 4B cooperate with each other to accomplish positioning when the panel element 4 is secured to the engagement portion. The engagement notch 114 in Fig. 3A and the engagement snap 43 in Fig. 4B cooperate with each other to ensure that the panel element 4 is secured to the engagement portion 111. It would be appreciated that the positions of the positioning hole 112, the engagement notch 114, the position protrusion 42 and the engagement snap 43 in Fig. 3A and Fig. 4B are provided only as an example. For example, the positioning hole and the engagement notch may be positioned at the panel element 4, while the positioning protrusion and the engagement snap may be disposed at the engagement portion 111 of the panel cover 11. Further, in addition to the engagement device as shown in Fig. 3A and Fig. 4B, the panel element 4 may be secured to the engagement portion 11 through screwing, adhesion or other fastening manners.

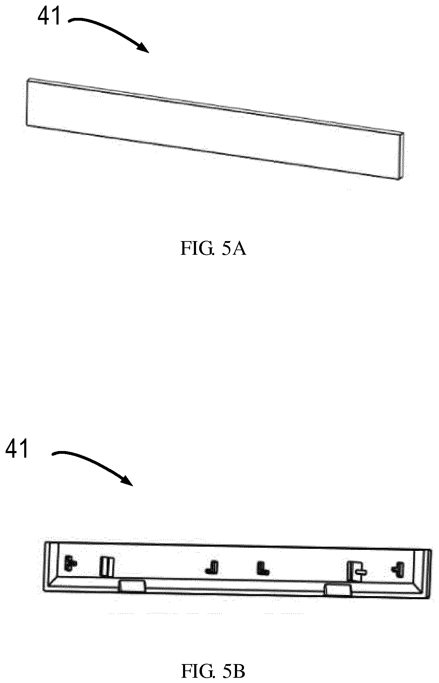

Fig. 5A and Fig. 5B illustrate an outer side surface and an inner side surface of the panel strip 41, respectively. The length of the panel strip 41 is only the length of a single panel. If the panel is used individually, the engagement portion 111, 121 or 131 on the panel cover 11, 12 or 13 may be provided with a panel strip 41 to cover the engagement portion, thereby protecting the engagement portion and presenting the single panel cover as a complete frameless panel cover. Similar to the panel element 4 in Fig. 4B, the inner side surface of the panel strip 41 is provided thereon with a positioning protrusion and an engagement snap for securing.

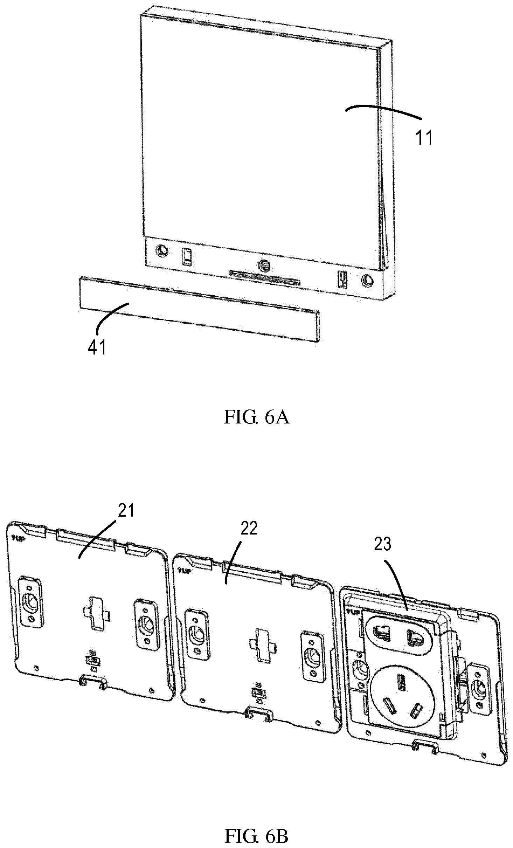

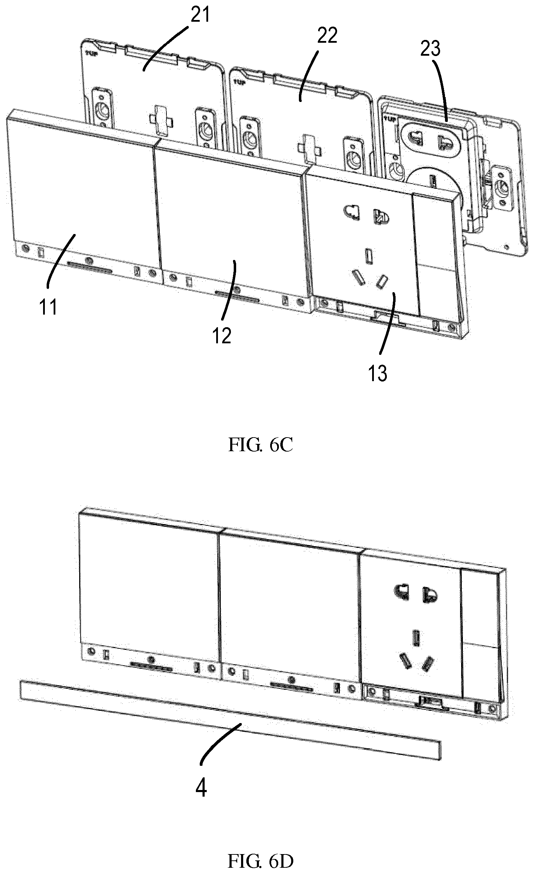

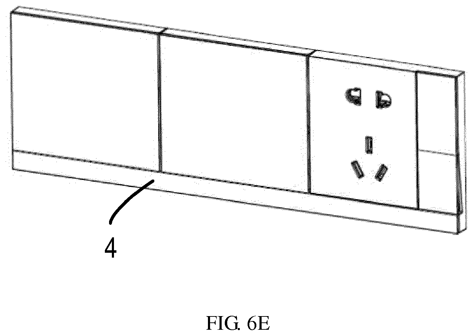

Fig. 6A through Fig. 6E are schematic diagrams illustrating assembling of the panel assembly 100 according to embodiments of the present disclosure. In Fig. 6A, a single panel strip 41 is first removed from a single-panel product which may be formed of the panel 1, 2 or 3 in Fig. 1. Then, in Fig. 6B, the functional modules 21, 22 and 23 are mounted onto the wall. For example, the functional modules 21, 22 and 23 may be mounted on the wall box, and spaces between the mounted functional modules are adjustable. In Fig. 6C, the frameless panel covers 11, 12 and 13 are mounted to the functional modules 21, 22 and 23, respectively. Finally, in Fig. 6D, the panel element 4 for multigang is mounted into the engagement portion 111, 121 or 131 of the panel covers 11, 12 and 13. Fig. 6E illustrates a panel assembly 100 after being mounted. The panel element 4 stretches across a plurality of panels to connect the panel covers 11, 12 and 13. The assembled panel assembly 100 is presented as a frameless multigang panel product.

The embodiments of the present disclosure provide a panel assembly and a multigang panel. The panel assembly includes engagement portions on panel covers, and a panel element as a multigang connector. The panel element cooperates with the engagement portions on the panel covers, and thus is secured across the plurality of panel covers onto respective engagement portions of the plurality of panel covers to connect the plurality of panel covers. The secured panel element is formed integrally with the plurality of panels. The solution according to embodiments of the present disclosure is helpful for positioning and securing of the panel covers, and attains a mounting appearance of a multigang product without a frame.

## Claims

1. A frameless panel assembly (100), comprising:
a plurality of panel covers (11, 12, 13) arranged sequentially adjacent to each other, each being frameless and comprising an engagement portion (111, 121, 131) disposed thereon, wherein the engagement portion is located on an outside surface of the respective panel covers;
a plurality of functional modules (21, 22, 23), each of the plurality of panel covers (11, 12, 13) being mounted onto the respective functional module (21, 22, 23) at the inner surface of the panel covers (11, 12, 13), the inner surface being opposite to the outside surface; and
a panel element (4) adapted to be secured across the plurality of panel covers (11, 12, 13) onto the respective engagement portions (111, 121, 131) of the plurality of panel covers (11, 12, 13), thereby connecting the plurality of panel covers (11, 12, 13) at the outside surface, the panel element (4) being of a strip shape.

2. The panel assembly (100) of claim 1, **characterized in that** each of the engagement portions (111, 121, 131) is a recess formed on the respective panel cover (11, 12, 13) and adapted to receive a portion of the panel element (4), and the recesses of the adjacent panel covers (11, 12, 13) are aligned with each other.

3. The panel assembly (100) of claim 2, **characterized in that** the engagement portion (111, 121, 131) is disposed at an edge of the outside surface of the respective panel cover (11, 12, 13).

4. The panel assembly (100) of any of claims 1-3, **characterized in that** the panel element (4) is adapted to be secured with the engagement portion (111, 121, 131) by means of an engagement device.

5. The panel assembly (100) of claim 4, **characterized in that** the engagement device comprises a secured component and a positioning component.

6. The panel assembly (100) of claim 5, **characterized in that** the secured component comprises an engagement notch (114) disposed on one of the engagement portion (111, 121, 131) and the panel element (4), and an engagement snap (43) disposed on the other of the engagement portion (111, 121, 131) and the panel element (4).

7. The panel assembly (100) of claim 5, **characterized in that** the positioning component comprises a positioning hole (112) disposed on one of the engagement portion (111, 121, 131) and the panel element (4), and a positioning protrusion (42) disposed on the other of the engagement portion (111, 121, 131) and the panel element (4).

8. A multigang panel, **characterized in** comprising the panel assembly (100) of any of claims 1-7.

## Patentansprüche

1. Rahmenlose Plattenanordnung (100), die umfasst:
eine Vielzahl von Plattenabdeckungen (11, 12, 13), die aufeinanderfolgend nebeneinander angeordnet sind, wobei jede rahmenlos ist und einen darauf angeordneten Eingriffsabschnitt (111, 121, 131) aufweist, wobei der Eingriffsabschnitt auf einer Außenfläche der jeweiligen Plattenabdeckungen angeordnet ist;
eine Vielzahl von Funktionsmodulen (21, 22, 23), wobei jede der Vielzahl von Plattenabdeckungen (11, 12, 13) auf dem jeweiligen Funktionsmodul (21, 22, 23) an der Innenfläche der Plattenabdeckungen (11, 12, 13) angebracht ist, wobei die Innenfläche der Außenfläche gegenüberliegt; und
ein Plattenelement (4), das so angepasst ist, dass es über die Vielzahl von Plattenabdeckungen (11, 12, 13) hinweg an den jeweiligen Eingriffsabschnitten (111, 121, 131) der Vielzahl von Plattenabdeckungen (11, 12, 13) befestigt werden kann, wodurch die Vielzahl von Plattenabdeckungen (11, 12, 13) an der Außenfläche verbunden wird, wobei das Plattenelement (4) eine Streifenform aufweist.

2. Plattenanordnung (100) nach Anspruch 1, **dadurch gekennzeichnet, dass** jeder der Eingriffsabschnitte (111, 121, 131) eine an der jeweiligen Plattenabdeckung (11, 12, 13) ausgebildete Aussparung ist und zur Aufnahme eines Abschnitts des Plattenelements (4) angepasst ist, und dass die Aussparungen der benachbarten Plattenabdeckungen (11, 12, 13) miteinander ausgerichtet sind.

3. Plattenanordnung (100) nach Anspruch 2, **dadurch gekennzeichnet, dass** der Eingriffsabschnitt (111, 121, 131) an einem Rand der Außenfläche der jeweiligen Plattenabdeckung (11, 12, 13) angeordnet ist.

4. Plattenanordnung (100) nach einem der Ansprüche 1 - 3, **dadurch gekennzeichnet, dass** das Plattenelement (4) so angepasst ist, dass es an dem Eingriffsabschnitt (111, 121, 131) mittels einer Eingriffsvorrichtung befestigt werden kann.

5. Plattenanordnung (100) nach Anspruch 4, **dadurch gekennzeichnet, dass** die Eingriffsvorrichtung eine befestigte Komponente und eine Positionierungskomponente umfasst.

6. Plattenanordnung (100) nach Anspruch 5, **dadurch gekennzeichnet, dass** die befestigte Komponente eine Eingriffskerbe (114), die entweder an dem Eingriffsabschnitt (111, 121, 131) oder dem Plattenelement (4) angeordnet ist, und einen Eingriffsschnapper (43) umfasst, der an dem anderen von dem Eingriffsabschnitt (111, 121, 131) und dem Plattenelement (4) angeordnet ist.

7. Plattenanordnung (100) nach Anspruch 5, **dadurch gekennzeichnet, dass** die Positionierungskomponente ein Positionierungsloch (112), das entweder an dem Eingriffsabschnitt (111, 121, 131) oder dem Plattenelement (4) angeordnet ist, und einen Positionierungsvorsprung (42) umfasst, der an dem anderen von dem Eingriffsabschnitt (111, 121, 131) und dem Plattenelement (4) angeordnet ist.

8. Multigangplatte, **dadurch gekennzeichnet, dass** sie die Plattenanordnung (100) nach einem der Ansprüche 1-7 umfasst.

## Revendications

1. Assemblage de panneaux sans cadre (100), comprenant :
une pluralité de couvertures de panneaux (11, 12, 13) agencées séquentiellement de manière adjacente les unes aux autres, chacune étant sans cadre et comprenant une portion d'engagement (111, 121, 131) disposée sur celle-ci, dans lequel la portion d'engagement est située sur une surface extérieure des couvertures de panneaux respectives ;
une pluralité de modules fonctionnels (21, 22, 23), chacune de la pluralité de couvertures de panneaux (11, 12, 13) étant montée sur le module fonctionnel respectif (21, 22, 23) au niveau de la surface intérieure des couvertures de panneaux (11, 12, 13), la surface intérieure étant opposée à la surface extérieure ; et
un élément de panneau (4) adapté pour être immobilisé parmi la pluralité de couvertures de panneaux (11, 12, 13) sur les portions d'engagement respectives (111, 121, 131) de la pluralité de couvertures de panneaux (11, 12, 13), connectant ainsi la pluralité de couvertures de panneaux (11, 12, 13) au niveau de la surface extérieure, l'élément de panneau (4) étant en forme de bande.

2. Assemblage de panneaux (100) selon la revendication 1, **caractérisé en ce que** chacune des portions d'engagement (111, 121, 131) est un évidement formé sur une couverture de panneau respective (11, 12, 13) et adapté pour recevoir une portion de l'élément de panneau (4), et les évidements des couvertures de panneaux adjacentes (11, 12, 13) sont alignés les uns avec les autres.

3. Assemblage de panneaux (100) selon la revendication 2, **caractérisé en ce que** la portion d'engagement (111, 121, 131) est disposée au niveau d'un bord de la surface extérieure de la couverture de panneau respective (11, 12, 13).

4. Assemblage de panneaux (100) selon l'une quelconque des revendications 1 à 3, **caractérisé en ce que** l'élément de panneau (4) est adapté pour être immobilisé avec la portion d'engagement (111, 121, 131) au moyen d'un dispositif d'engagement.

5. Assemblage de panneaux (100) selon la revendication 4, **caractérisé en ce que** le dispositif d'engagement comprend un composant immobilisé et un composant de positionnement.

6. Assemblage de panneaux (100) selon la revendication 5, **caractérisé en ce que** le composant immobilisé comprend une encoche d'engagement (114) disposée sur un élément parmi la portion d'engagement (111, 121, 121) et l'élément de panneau (4), et un tenon d'engagement (43) disposé sur l'autre élément parmi la portion d'engagement (111, 121, 131) et l'élément de panneau (4).

7. Assemblage de panneaux (100) selon la revendication 5, **caractérisé en ce que** le composant de positionnement comprend un trou de positionnement (112) disposé sur un élément parmi la portion d'engagement (111, 121, 131) et l'élément de panneau (4), et une projection de positionnement (42) disposée sur l'autre élément parmi la portion d'engagement (111, 121, 131) et l'élément de panneau (4).

8. Panneau multigang **caractérisé en ce qu'**il comprend l'assemblage de panneaux (100) selon l'une quelconque des revendications 1 à 7.
